(19) **Europäisches Patentamt**

**European Patent Office**

**Office européen des brevets**

(11) **EP 1 724 606 A1**

(12) **EUROPÄISCHE PATENTANMELDUNG**

| | |
|---|---|
| (43) Veröffentlichungstag:<br>**22.11.2006 Patentblatt 2006/47** | (51) Int Cl.:<br>***G01S 5/14*** *(2006.01)* |

(21) Anmeldenummer: **05104210.9**

(22) Anmeldetag: **18.05.2005**

| | |
|---|---|
| (84) Benannte Vertragsstaaten:<br>**AT BE BG CH CY CZ DE DK EE ES FI FR GB GR HU IE IS IT LI LT LU MC NL PL PT RO SE SI SK TR**<br>Benannte Erstreckungsstaaten:<br>**AL BA HR LV MK YU** | (72) Erfinder: **Euler, Hans-Jürgen**<br>**9435, Heerbrugg (CH)** |
| (71) Anmelder: **Leica Geosystems AG**<br>**9435 Heerbrugg (CH)** | (74) Vertreter: **Harmann, Bernd-Günther**<br>**Büchel, Kaminski & Partner**<br>**Patentanwälte Est.**<br>**Austrasse 79**<br>**9490 Vaduz (LI)** |

(54) **Positionsbestimmungsverfahren für ein satellitengestütztes Positionierungssystem**

(57)    Für ein satellitengestütztes Positionierungssystem bei dem eine Sendeeinheit (2) elektromagnetische Strahlung mit wenigstens zwei Trägerfrequenzen (4,5) aussendet, erfolgt zur Positionsbestimmung ein Empfangen der elektromagnetischen Strahlung durch eine Empfangseinheit (1) und ein Ableiten von wenigstens zwei Pseudostrecken (5a) und wenigstens zwei Trägerphasen (4b,5b) aus der empfangenen Strahlung. Zur Glättung von Messungen wenigstens einer der Pseudostrecken (5a) wird eine Linearkombination (6) so gebildet, dass sich für einen Ionosphäreneinfluss ein positives Vorzeichen ergibt. Damit kann aus zu glättender Pseudostrecke (5a) und Linearkombination (6) eine Differenz (7) gebildet werden, die keine zeitliche Abhängigkeit von Ionosphäreneinflüssen mehr aufweist. Aus der Aggregierung einer Mehrzahl solcher Differenzen kann schliesslich eine geglättete Pseudostrecke (5a') abgeleitet werden.

Fig. 4

**Beschreibung**

Die Erfindung betrifft ein Positionsbestimmungsverfahren für ein satellitengestütztes Positionierungssystem nach dem Oberbegriff des Anspruchs 1 und ein Computerprogrammprodukt.

Zur Positionsbestimmung werden gegenwärtig und in Zukunft globale oder satellitenbasierte Positionierungssysteme GNSS (z.B. GPS, GLONASS, GALILEO etc.) für viele Anwendungen genutzt. Hierfür strahlen die Satelliten des Raumsegments elektromagnetische Strahlung mit mehreren Trägerfrequenzen aus. Auf diese Trägerfrequenzen sind zumeist ein- oder mehrere Codes aufmoduliert, die zur Übertragung von Informationen dienen.

Die elektromagnetische Strahlung wird von einem Empfänger erfasst und zur Positionsbestimmung hinsichtlich verschiedener Grössen ausgewertet. So werden anhand der Laufzeiten der Signale von einem Satelliten zum Empfänger sogenannte Pseudostrecken ermittelt, wobei diese durch verschiedene Einflüsse, wie z.B. der Differenz zwischen Satelliten- und Empfängeruhr, von der wahren Distanz abweichen. Diese Pseudostreckenmessungen basieren dabei auf dem einer Trägerfrequenz aufmodulierten Code, der Informationen über den Abstrahlungszeitpunkt des Signals vom Satelliten enthält. Die Satellitensignale werden dabei auf mehreren Trägerfrequenzen übertragen, die bspw. für das GPS-System mit L1 ($154 \cdot 10{,}23 \cdot 10^6$ Hz), L2 ($120 \cdot 10{,}23 \cdot 10^6$ Hz) oder L5 ($115 \cdot 10{,}23 \cdot 10^6$ Hz) bezeichnet werden. Bei GALILEO werden beispielsweise die korrespondierenden Frequenzen mit E1-L1-E2 und E5a bezeichnet, wobei als drittes Signal E6 mit ($125 \cdot 10{,}23 \cdot 10^6$ Hz) zur Verfügung stehen wird. Weitere Frequenzen sind bei Galileo ebenfalls anmessbar.

Eine weitere Möglichkeit zur Entfernungsbestimmung besteht in der Nutzung der Phaseninformationen des Signals. Dabei erfolgt die Messung der Phasenverschiebung, wobei die Nutzung der Trägerphasen eine präzise Positionsbestimmung erlaubt. Der Nachteil der Phasenmessungen liegt jedoch darin, dass deren Distanz nur bis auf ein Vielfaches der verwendeten Wellenlänge bestimmt ist.

Durch die Nutzung von zwei Frequenzen sollten ursprünglich ionosphärische Laufzeitverzögerungen korrigiert werden, wobei jedoch auch durch Linearkombinationen spezielle Kombinationsphasen generiert werden können, wie z.B. ionosphären- oder geometriefreie Linearkombinationen.

Die Kombination von Trägerphasen und Pseudostrecken auf beiden Wellenlängen zur Lösung sogenannter "Widelanes" wurde in den 1980er Jahren entwickelt. Damals war ein erster, ziviler GPS-Empfänger mit Pseudostreckenmessung auf beiden Frequenzen auf dem Markt. Dieser Empfänger verwendete den noch unverschlüsselten P-Code sowohl auf der L1- als auch der L2-Frequenz. Die gemessenen Pseudostrecken waren aufgrund der kürzeren Codewellenlänge von ca. 30 Meter wesentlich genauer als Pseudostreckenmessungen mit Hilfe des C/A-Codes (300m Wellenlänge). Aufgezeichnet wurden L1- und L2-Pseudostrecken als auch L1-und L2-Trägerphasenmessungen.

Das Prinzip der Kombination der Beobachtungen zweier Frequenzen besteht in der Elimination der allen Beobachtungen gemeinsamen Anteile, Kombinationen von Schrägstrecke zum Satelliten, Troposphäre und Ähnlichem, und des dispersiven, ionosphärischen Anteils, der ein unterschiedliches Vorzeichen für Pseudostrecken und Phasenmessungen aufweist. Während allgemein nur auf die vorteilhafte Widelane gelöst wird, kann das Verfahren für beliebige Linearkombinationen aufgestellt werden. Hierbei ist anzumerken, dass die Lösung der Widelanes zwischen einer Station und einem Satelliten nur theoretisch möglich ist. Zwischen den Frequenzen unterschiedliche Uhrenfehler im Satelliten und dem Empfänger verhindern diese Möglichkeit. Aus diesem Grund kann eine Lösung nur nach der Bildung von Doppeldifferenzen oder der Einführung der jeweiligen Uhrendifferenzen erfolgen.

Dieser Ansatz der Verwendung von zwei Frequenzen und den Messungen der zugeordneten Trägerphasen und Pseudostrecken verbindet die mit der Trägerphase grundsätzlich mögliche Genauigkeit mit der durch die Pseudostreckenmessung mögliche Festlegung der Phasenmehrdeutigkeit. Eine direkte Auflösung erlaubt der sogenannte Melbourne-Wübbena-Ansatz, bei dem Phasen- und Pseudostreckenmessungen in einem zu lösenden Gleichungssystem kombiniert werden. Hierbei werden die Trägerphasenmessungen als Phasenstrecken angegeben, d.h. in metrischen Einheiten anstelle von sonst üblicherweise verwendeten Zyklen - durch die Multiplikation mit der Wellenlänge der jeweiligen Trägerphase erhält man die sogenannte Phasenstrecke.

Der Ansatz beruht auf der Modellierung der Phasenstrecken für die beiden Trägerfrequenzen gemäss

$$\phi_1 = \rho - \frac{I}{f_1^2} + N_1 \lambda_1 + \varepsilon_{\phi_1} \qquad (1)$$

$$\phi_2 = \rho - \frac{I}{f_2^2} + N_2 \lambda_2 + \varepsilon_{\phi_2} \qquad (2)$$

und der Pseudostrecken gemäss

$$R_1 = \rho + \frac{I}{f_1^2} + \varepsilon_{R_1} \qquad (3)$$

$$R_2 = \rho + \frac{I}{f_2^2} + \varepsilon_{R_2} \qquad (4)$$

wobei mit $i=1,2$ $\phi_i$ eine der i-ten Trägerfrequenz zugeordnete Phasenstrecke, $R_i$ die i-te Pseudostrecke, $\rho$ die geometrische Strecke zwischen Satellit und Empfangseinheit, insbesondere einschliesslich Uhrenfehlern und nicht-dispersiven Fehleranteilen, $\frac{I}{f_i^2}$ einen Ionosphäreneinfluss für die i-te Trägerfrequenz, $N_i$ eine Phasenmehrdeutigkeit für die der i-ten Trägerfrequenz zugeordnete Wellenlänge $\lambda_1$, $\varepsilon_{\phi_i}$ einen Rauschanteil für die der i-ten Trägerfrequenz zugeordnete Phasenstrecke und $\varepsilon_{R_i}$ einen Rauschanteil für die i-te Pseudostrecke bezeichnen.

Die direkte, numerische Kombination dieser vier Beobachtungen ermöglicht die Lösung der Mehrdeutigkeiten der Differenz beider Trägerphasenmessungen. In der Regel müssen die Ergebnisse über eine gewisse Zeit akkumuliert werden um eine eindeutige Lösung zu ermöglichen, d.h. es erfolgt eine Mittelwertbildung der berechneten Widelanes. Ursache hierfür sind die meist zu ungenauen Pseudostreckenmessungen. Eine andere Möglichkeit besteht in der Verwendung eines Kalmanfilters in dem die Beobachtungen auf einfachste Weise modelliert werden. Das Melbourne-Wübbena-Modell und die Verwendung von Filtern wird beispielsweise in Euler, Hans-Jürgen und Goad, Clyde C., "*On optimal filtering of GPS dual frequency observations without using orbit information*", Bulletin Géodésique (1991) 65: 130-143 erläutert.

Bei dem Verfahren handelt es sich um eine differentielle Positionsbestimmung, da die ganzzahligen Phasenmehrdeutigkeiten nur in der Doppeldifferenz festlegbar sind. Dies ist wegen noch vorhandener Fehler, z.B. Satelliten- und Empfängeruhrenfehler, notwendig. Durch die Kombination von 2 Phasenmessungen, die in den Gleichungen (1) und (2) schon als Phasenstrecken ausgedrückt werden, und den 2 Pseudostreckenmessungen in Gleichung (3) und (4) mit anschliessender Doppeldifferentierung, können die Phasenmehrdeutigen für Widelanes ohne Einbeziehung der Geometrie, d.h. Positionsberechnung der Satelliten und des Empfängers, bestimmt und festgelegt werden. Hier liegt der Vorteil des Widelanings auf diese Art und Weise.

Um die Genauigkeit der Pseudostreckenmessungen zu verbessern kann zudem eine Glättung der Pseudostrecke durchgeführt werden. Hierzu wird eine Differenz von Pseudostrecke und Phasenstrecke herangezogen:

$$R_i - \phi_i = 2\frac{I}{f_i^2} - \lambda_i N_i - \varepsilon_{\phi_i} + \varepsilon_{R_i} \qquad (5)$$

$$\phi_i = \rho - \frac{I}{f_i^2} + \lambda_i N_i + \varepsilon_{\phi_i}$$

wobei

$$R_i = \rho + \frac{I}{f_i^2} + \varepsilon_{R_i}$$

Solange die Trägerphase und damit das metrische Pendant, die Phasenstrecke, nicht durch Zyklusfehler gestört sind, kann durch eine einfache Mittelbildung das Messrauschen der Differenz und damit der Pseudostrecken reduziert werden. Jedoch bilden die zeitlichen Änderungen der Ionosphäre ein Hindernis in bezug auf die Länge des Zeitintervalls der Mittelung. Üblicherweise wird versucht, nicht länger als eine Minute zu filtern.

Die Aufgabe der vorliegenden Erfindung besteht in Bereitstellung eines Positionsbestimmungsverfahrens für ein satellitenbasiertes Positionierungssystem, das eine gegenüber dem Stand der Technik erhöhte Genauigkeit erlaubt.

Eine weitere Aufgabe besteht in der Bereitstellung eines Verfahrens, welches keine durch Änderungen in der Ionosphäre bedingte zeitliche Begrenzung bei der Glättung von Pseudostrecken aufweist.

Eine weitere Aufgabe besteht in der verbesserten Robustheit gegenüber Zyklusfehlern.

Diese Aufgaben werden erfindungsgemäss durch das Verfahren des Anspruchs 1 sowie durch die kennzeichnenden Merkmale der Unteransprüche gelöst bzw. die Lösungen fortgebildet.

Die Erfindung betrifft ein Positionsbestimmungsverfahren für ein satellitengestütztes Positionierungssystem nach dem Anspruch 1 und ein entsprechendes Computerprogrammprodukt nach Anspruch 9.

Das erfindungsgemässe Konzept basiert auf der Bildung von Linearkombinationen von Phasenmessungen, wobei die Linearkombination so erfolgt, dass Ionosphäreneinflüsse nach einer Differenzbildung mit einer zu glättenden Pseudostrecke herausfallen. Dabei können eine oder alle beide für die Bestimmung der Pseudostrecke von den für die Trägerphasenmessung verwendeten abweichen.

Um solch ein divergenzfreie Glättung von Pseudostrecken zu erzielen, können erfindungsgemäss Linearkombinationen von Trägerphasenmessungen gebildet werden, deren Änderungen exakt den Änderungen von Pseudostrecken entsprechen, was eine Umkehrung des Vorzeichens des ionosphärischen Einflusses bedingt. Einfache Differenzen zwischen den Trägerphasen und der Pseudostrecke enthalten dann im wesentlichen nur den Rauschanteil der Pseudostrecken. Dieser Rauschanteil kann über die Zeit gemittelt werden und durch Rücksubstitution wird eine geglättete Pseudostrecke erhalten.

Für die Glättung einer Pseudostrecke kann bei Messungen von drei oder mehr Trägerfrequenzen die modifizierte Phasenstrecke mit gedrehtem Vorzeichen des ionosphärischen Anteils aus Trägerphasen gebildet werden, deren Frequenzen nicht der zu glättenden Pseudostrecke entspricht. Dies bietet einen Vorteil, wenn die Trägerphase mit derselben Frequenz wie die zu glättende Pseudostrecke einen Zyklusfehler aufweist. In einen solchen Fall müsste ansonsten zwangsläufig die Mittelung neu initialisiert werden.

Die Linearkombination kann gemäss

$$\phi_i^* = F(\phi_1, \phi_2) = \rho + \frac{I}{f_i^2} + G(N_1, N_2) + \varepsilon_{\phi_i^*} \qquad (6)$$

beschrieben werden, wobei $\phi_1$ und $\phi_2$ jeweils eine einer ersten bzw. zweiten Trägerfrequenz zugeordnete Phasenstrecke, $F(\phi_1, \phi_2)$ eine Linearkombination der Phasenstrecken, $G(N_1, N_2)$ eine Linearkombination der Phasenmehrdeutigkeiten und $\varepsilon_{\phi_i}^*$ einen Rauschanteil für die Linearkombination bezeichnen. $G(N_1, N_2)$ bleibt konstant, solange keine Zyklusfehler auf beiden Trägerfrequenzen auftreten. Eine Differenzbildung mit einer der Frequenz $f_i$ zugeordneten Pseudostrecke führt dann zum Wegfall des ionosphärenabhängigen Terms.

Als Ergebnis dieser Differenzbildung aus Linearkombination und wenigstens einer der Trägerfrequenzen zugeordneten Pseudostrecke folgt dann

$$R_i - \phi_i^* = -G(N_1, N_2) - \varepsilon_{\phi_i^*} + \varepsilon_{R_i} \qquad (7)$$

mit $R_i$ als Pseudostrecke der dritten oder weiteren Trägerfrequenz und $\varepsilon_{R_i}$ als zugeordnetem Rauschanteil.

Im Gegensatz zum Verfahren des Stands der Technik kann das Zeitintervall für die Glättung prinzipiell beliebig lange gewählt werden, da keine zeitabhängigen Grössen auf der rechten Seite stehen. Der Rauschanteil der Linearkombination entspricht typischerweise Fehlern im subcm-Bereich, derjenige der Pseudostrecke Fehlern im m- bis sub-m-Bereich.

Geeignete Faktoren γ* **und** δ* zur Erzeugung einer Phasenkombinationslösung - für die Phasenmessungen einer ersten und einer zweiten Trägerfrequenz $f_1$ und $f_2$ - mit umgedrehten Vorzeichen für eine Pseudostrecke, welche einer Trägerfrequenz $f_i$ zugeordnet ist, können wie folgt formuliert werden

$$\gamma^* = \frac{f_2^2}{f_2^2 - f_1^2}$$

$$\delta^* = -\frac{f_2^2}{f_2^2 - f_1^2}$$

$$(8)$$

Soll nun die erste oder primäre Trägerfrequenz, z.B. eine L1-Frequenz des GPS-Systems, geglättet werden, so ergibt sich mit

$$\phi_1 = \rho - \frac{I}{f_1^2} + \lambda_1 N_1$$

$$\phi_2 = \rho - \frac{I}{f_2^2} + \lambda_2 N_2$$

$$(9)$$

und obigen Faktoren nach Einsetzen

$$\phi_{Iono1} = \phi_1 \gamma^* - \phi_2 \delta^* = \left( \rho - \frac{I}{f_1^2} + \lambda_1 N_1 \right)\left( \frac{f_2^2}{f_2^2 - f_1^2} \right) - \left( \rho - \frac{I}{f_2^2} + \lambda_2 N_2 \right)\left( -\frac{f_2^2}{f_2^2 - f_1^2} \right)$$

$$= \rho \frac{f_2^2}{f_2^2 - f_1^2} - \frac{I}{f_1^2}\frac{f_2^2}{f_2^2 - f_1^2} + \lambda_1 N_1 \frac{f_2^2}{f_2^2 - f_1^2} - \rho \frac{f_2^2}{f_2^2 - f_1^2} + \frac{I}{f_2^2}\frac{f_2^2}{f_2^2 - f_1^2} - \lambda_2 N_2 \frac{f_2^2}{f_2^2 - f_1^2}$$

$$= -\frac{I}{f_1^2}\frac{f_2^2}{f_2^2 - f_1^2} + \frac{I}{f_2^2}\frac{f_2^2}{f_2^2 - f_1^2} + \lambda_1 N_1 \frac{f_2^2}{f_2^2 - f_1^2} - \lambda_2 N_2 \frac{f_2^2}{f_2^2 - f_1^2}$$

$$= -\frac{I}{f_1^2}\frac{f_2^2}{f_2^2 - f_1^2} + \frac{I}{f_1^2}\frac{f_1^2}{f_2^2 - f_1^2} + \lambda_1 N_1 \frac{f_2^2}{f_2^2 - f_1^2} - \lambda_2 N_2 \frac{f_2^2}{f_2^2 - f_1^2}$$

$$= -\frac{I}{f_1^2}\left( \frac{f_2^2}{f_2^2 - f_1^2} - \frac{f_1^2}{f_2^2 - f_1^2} \right) + \lambda_1 N_1 \frac{f_2^2}{f_2^2 - f_1^2} - \lambda_2 N_2 \frac{f_2^2}{f_2^2 - f_1^2}$$

woraus

$$\phi_{Iono1} = -\frac{I}{f_1^2} + \lambda_1 N_1 \frac{f_2^2}{f_2^2 - f_1^2} - \lambda_2 N_2 \frac{f_2^2}{f_2^2 - f_1^2}$$

$$(10)$$

folgt. Mit der zu glättenden Pseudostrecke für die erste Trägerfrequenz gemäss Gleichung (3) und

$$\phi_1^* = F(\phi_1, \phi_2) = \phi_1 - 2 \cdot \phi_{Iono1} \qquad (11)$$

ergibt sich

$$R_1 - \phi_1^* = \rho + \frac{I}{f_1^2} + \varepsilon_{R_1} - \left( \rho - \frac{I}{f_1^2} + \lambda_1 N_1 + 2\frac{I}{f_1^2} - 2\lambda_1 N_1 \frac{f_2^2}{f_2^2 - f_1^2} + 2\lambda_2 N_2 \frac{f_2^2}{f_2^2 - f_1^2} \right)$$

$$= \rho + \frac{I}{f_1^2} + \varepsilon_{R_1} - \left( \rho + \frac{I}{f_1^2} + \lambda_1 N_1 + 2(\lambda_2 N_2 - \lambda_1 N_1)\frac{f_2^2}{f_2^2 - f_1^2} \right)$$

$$= \lambda_1 N_1 + 2(\lambda_2 N_2 - \lambda_1 N_1)\frac{f_2^2}{f_2^2 - f_1^2} + \varepsilon_{R_1}$$

$$= G(N_1, N_2) + \varepsilon_{R_1}$$

was erfindungsgemäss keinerlei ionosphärenbedingt zeitabhängige Grösse mehr aufweist.

Die Glättung der zweiten oder sekundären Trägerfrequenz, welche beispielsweise die L2-Frequenz im GPS-System sein kann, erfolgt in analoger Weise gemäss Gleichung (2) und (4) mit

$$\phi_{Iono2} = \frac{f_1^2}{f_2^2} \phi_{Iono1}$$

$$\phi_{Iono2} = -\frac{I}{f_2^2} + \lambda_1 N_1 \frac{f_1^2}{f_2^2 - f_1^2} - \lambda_2 N_2 \frac{f_1^2}{f_2^2 - f_1^2}$$

$$\phi_2^* = F(\phi_1, \phi_2) = \phi_2 - 2 \cdot \phi_{Iono2}$$

$$= \rho - \frac{I}{f_2^2} + \lambda_2 N_2 - 2 \cdot \left( -\frac{I}{f_2^2} + \lambda_1 N_1 \frac{f_1^2}{f_2^2 - f_1^2} - \lambda_2 N_2 \frac{f_1^2}{f_2^2 - f_1^2} \right)$$

$$= \rho + \frac{I}{f_2^2} + \lambda_2 N_2 - 2 \cdot \left( \lambda_1 N_1 \frac{f_1^2}{f_2^2 - f_1^2} - \lambda_2 N_2 \frac{f_1^2}{f_2^2 - f_1^2} \right)$$

$$G(N_1, N_2) = \lambda_2 N_2 - 2 \cdot \left( \lambda_1 N_1 \frac{f_1^2}{f_2^2 - f_1^2} - \lambda_2 N_2 \frac{f_1^2}{f_2^2 - f_1^2} \right)$$

Mit der Modernisierung von GPS wird in Zukunft eine dritte Wellenlänge mit Trägerphase und eventuell auch Codierung zur Verfügung stehen. Das Melbourne-Wübbena-Verfahren kann dann erfindungsgemäss in Kombinationen der ersten mit der dritten oder zweiten mit der dritten Trägerphase und den jeweiligen Pseudostreckenmessungen angewandt werden. Das neue Europäische Satellitensystem Galileo wird ebenfalls Signale auf mehr als 2 Frequenzen aussenden. Ähnliche Planungen existieren ebenfalls für das russische GLONASS. Somit kann eine Glättung auch unter Verwendung der drei Trägerfrequenzen erfolgen. Beispielsweise kann die der dritten Trägerfrequenz zugeordnete Pseudostrecke mit Hilfe der Trägerphasen der ersten beiden Trägerfrequenzen erfolgen.

Es folgt dann mit

$$\phi_{Iono3} = \frac{f_1^2}{f_3^2}\phi_{Iono1}$$

$$(12)$$

$$\phi_{Iono3} = -\frac{I}{f_3^2} + \lambda_1 N_1 \frac{f_2^2}{f_2^2 - f_1^2}\frac{f_1^2}{f_3^2} - \lambda_2 N_2 \frac{f_2^2}{f_2^2 - f_1^2}\frac{f_1^2}{f_3^2}$$

so dass sich die modifizierte Phasenstrecke für die dritte Trägerfrequenz als Linearkombination der Phasenstrecken gemäss

$$\phi_3^* = F(\phi_1, \phi_2) = \phi_1 - \phi_{Iono1} - \phi_{Iono3}$$

$$(13)$$

ergibt, wobei diese wie folgt ausformuliert werden kann:

$$\phi_3^* = \rho - \frac{I}{f_1^2} + \lambda_1 N_1 - \left(-\frac{I}{f_1^2} + \lambda_1 N_1 \frac{f_2^2}{f_2^2 - f_1^2} - \lambda_2 N_2 \frac{f_2^2}{f_2^2 - f_1^2}\right)$$
$$+ \frac{I}{f_3^2} - \lambda_1 N_1 \frac{f_2^2}{f_2^2 - f_1^2}\frac{f_1^2}{f_3^2} + \lambda_2 N_2 \frac{f_2^2}{f_2^2 - f_1^2}\frac{f_1^2}{f_3^2}$$

$$(14)$$

und

$$\phi_3^* = \rho + \frac{I}{f_3^2} + \lambda_1 N_1 - \left(\lambda_1 N_1 \frac{f_2^2}{f_2^2 - f_1^2} - \lambda_2 N_2 \frac{f_2^2}{f_2^2 - f_1^2}\right)$$
$$- \lambda_1 N_1 \frac{f_2^2}{f_2^2 - f_1^2}\frac{f_1^2}{f_3^2} + \lambda_2 N_2 \frac{f_2^2}{f_2^2 - f_1^2}\frac{f_1^2}{f_3^2}$$

$$(15)$$

Damit folgt nach Gleichung (7) als Linearkombination der Phasenmehrdeutigkeiten

$$G(N_1, N_2) = +\lambda_1 N_1 - \lambda_1 N_1 \frac{f_2^2}{f_2^2 - f_1^2} + \lambda_2 N_2 \frac{f_2^2}{f_2^2 - f_1^2}$$

$$- \lambda_1 N_1 \frac{f_2^2}{f_2^2 - f_1^2} \frac{f_1^2}{f_3^2} + \lambda_2 N_2 \frac{f_2^2}{f_2^2 - f_1^2} \frac{f_1^2}{f_3^2}$$

$$G(N_1, N_2) = +\lambda_1 N_1 - \lambda_1 N_1 \frac{f_2^2}{f_2^2 - f_1^2} - \lambda_1 N_1 \frac{f_2^2}{f_2^2 - f_1^2} \frac{f_1^2}{f_3^2} \qquad (16)$$

$$+ \lambda_2 N_2 \frac{f_2^2}{f_2^2 - f_1^2} + \lambda_2 N_2 \frac{f_2^2}{f_2^2 - f_1^2} \frac{f_1^2}{f_3^2}$$

$$G(N_1, N_2) = \lambda_1 N_1 \left( 1 - \frac{f_2^2}{f_2^2 - f_1^2} - \frac{f_2^2}{f_2^2 - f_1^2} \frac{f_1^2}{f_3^2} \right)$$

$$+ \lambda_2 N_2 \left( \frac{f_2^2}{f_2^2 - f_1^2} + \frac{f_2^2}{f_2^2 - f_1^2} \frac{f_1^2}{f_3^2} \right)$$

Dieser Ausdruck weist ebenfalls die beabsichtigte prinzipielle Unabhängigkeit von zeitlichen Veränderungen auf.

In einem beispielhaft konkretisierten Anwendungsfall können der Trägerfrequenzen $f_1$ und $f_2$ die GPS-Frequenzen L1 und L2 sowie der dritten Trägerfrequenz $f_3$ die GPS-Frequenz L5 entsprechen.

Das erfindungsgemässe Positionsbestimmungsverfahren wird nachfolgend anhand von in der Zeichnung schematisch dargestellten Ausführungsbeispielen rein beispielhaft näher beschrieben. Im einzelnen zeigen

Fig.1   eine erläuternde Darstellung der Positionsbestimmung mit einem globalen Positionierungssystem nach dem Stand der Technik;

Fig.2   eine schematische Darstellung der Positionsbestimmung mit direkter Auflösung der Phasenmehrdeutigkeit durch Nutzung von zwei Trägerfrequenzen nach dem Stand der Technik;

Fig.3   eine schematische Darstellung des erfindungsgemässen Verfahrens;

Fig.4   eine schematische Darstellung eines ersten Ausführungsbeispiels des erfindungsgemässen Verfahrens mit zwei Trägerfrequenzen und

Fig.5   eine schematische Darstellung eines zweiten Ausführungsbeispiels des erfindungsgemässen Verfahrens mit drei Trägerfrequenzen.

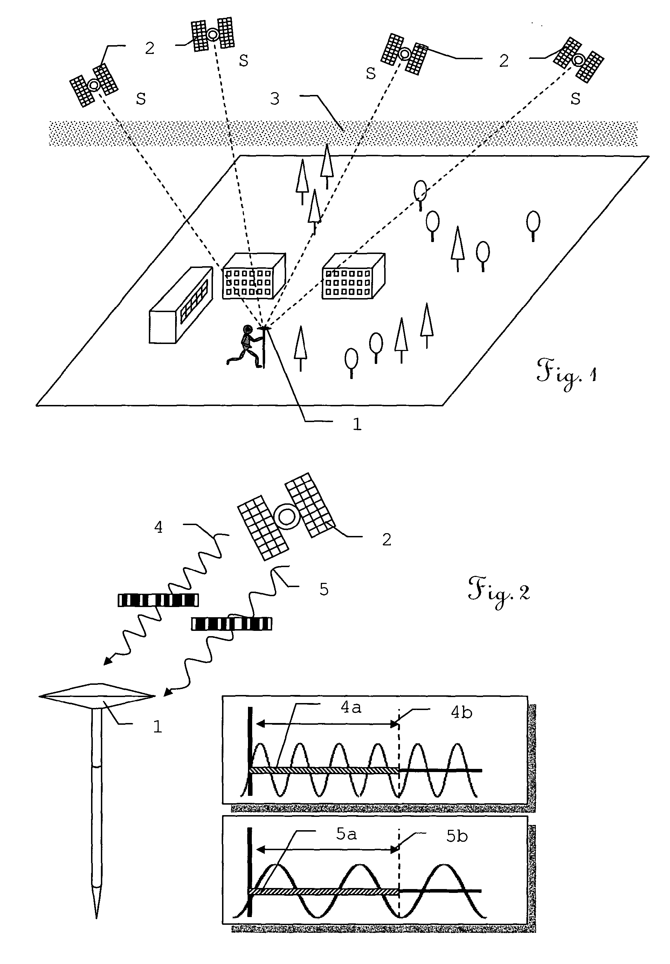

In Fig.1 wird die Positionsbestimmung mit einem globalen Positionierungssystem nach dem Stand der Technik erläutert. Eine Empfangseinheit 1 für ein globales, satellitenbasiertes Positionierungssystem empfängt die von Satelliten 2 als Sendeeinheit emittierte elektromagnetische Strahlung S und wertet die Strahlung S hinsichtlich ihrer inhärenten, wie z.B. Trägerphasen, und aufmodulierten Eigenschaften, wie z.B. eines Codes, aus. In der Regel werden dabei für eine hinreichend genaue Positionsbestimmung Sichtstrecken bzw. empfangene Signale von wenigstens vier Satelliten 2 benötigt. Auf dem Weg vom Satelliten 2 zur Empfangseinheit durchquert die elektromagnetische Strahlung die Ionosphäre 3, in der aufgrund der dort vorhandenen Ladungsträger eine frequenz- bzw. wellenlängenabhängige ionosphärische Verzögerung auftritt. Dieser Ionosphäreneinfluss kann zur genauen Positionsbestimmung durch gleichzeitige Messung von zwei Frequenzen eliminiert werden.

Zur Korrektur dieser ionosphärischer Verzögerungen oder der Uhrendifferenzen zwischen Satelliten 2 und Empfangseinheit 1 werden zumeist mindestens 2 Trägerfrequenzen hinsichtlich zweier Grössen ausgewertet. Fig.2 zeigt schematisch eine solche Nutzung zweier Trägerfrequenzen mit direkter Auflösung der Phasenmehrdeutigkeit nach dem Stand der Technik. Die Empfangseinheit 1 analysiert hierbei die Signale einer ersten Trägerfrequenz 4 und einer zweiten Trägerfrequenz 5, bzw. deren zugeordneter Wellenlängen. Anhand des aufgeprägten Codes können den jeweiligen Trägerfrequenzen zugeordnete Pseudostrecken 4a und 5a abgeleitet werden, die über eine Laufzeitbestimmung die Distanz von Empfangseinheit 1 zum Satelliten 2 repräsentieren. Allerdings ist diese Distanz noch durch Uhrenfehler verfälscht. Parallel werden für die beiden Trägerfrequenzen die Phasenstrecken 4b und 5b gegenüber einem internen Referenzsignal ermittelt. Diese Phasenstrecken 4b und 5b repräsentieren eine Distanz und sind zwar präzise, jedoch noch mit einer aufzulösenden Phasenmehrdeutigkeit verknüpft, wobei durch doppelte Differenzbildung auf eine tatsächliche Bestimmung der Distanz zur Auflösung dieser Phasenmehrdeutigkeit verzichtet werden kann. Aus der Kombination von Pseudostrecken 4a und 5a und der Phasenstrecken 4b und 5b als metrisches Äquivalent einer zugrundeliegenden Phasenverschiebung, bzw. deren Differenzen, kann eine direkte Lösung der Mehrdeutigkeit und eine Eliminierung von Fehlern erfolgen. Im Stand der Technik werden für Phasenmessung und Bestimmung der Pseudostrecken jeweils die gleichen zwei Trägerfrequenzen verwendet, beispielsweise bei GPS L1 und L2.

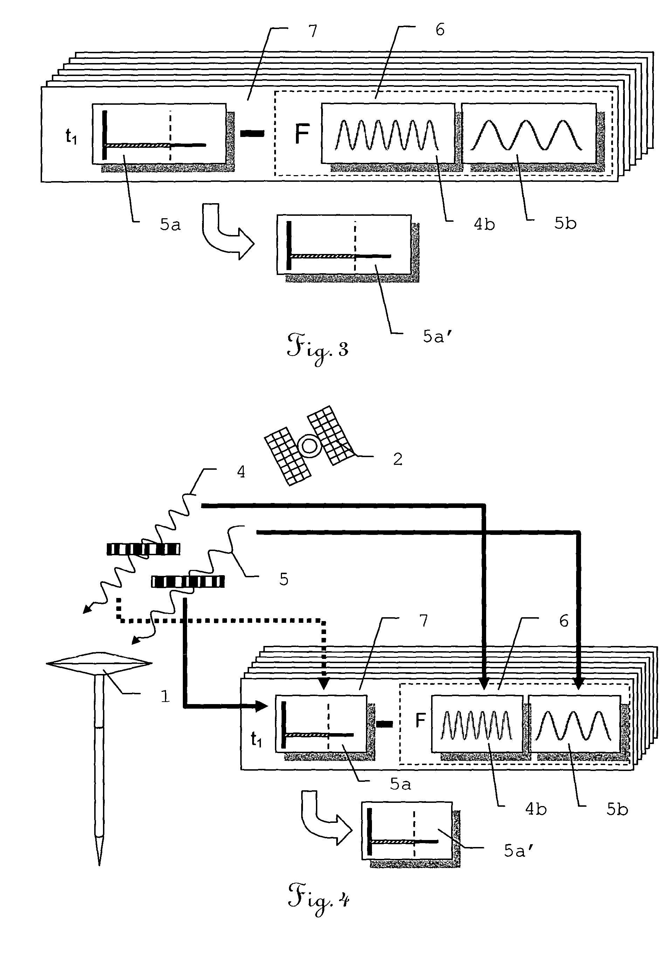

Fig.3 erläutert das erfindungsgemässe Verfahren in Form einer schematischen Darstellung. Aus einer ersten Phasenstrecke 4b und einer zweiten Phasenstrecke 5b, die beispielsweise für die erste und zweite Trägerfrequenz gemessen werden, wird eine Linearkombination 6 gebildet. Diese Linearkombination wird so erzeugt, dass sich im resultierenden Ausdruck ein positives Vorzeichen für einen Ionosphäreneinfluss ergibt, was durch Wahl von geeigneten Kombinationsfaktoren erfolgt. Aus der Linearkombination 6 und einer zu glättenden Pseudostrecke 5a wird eine Differenz 7 gebildet, die eine zeitliche Unabhängigkeit von Ionosphäreneinflüssen aufweist. Aus einer Mehrzahl von Differenzen, die für Messungen zu unterschiedlichen Zeitpunkten gebildet werden, kann schliesslich die geglättete Pseudostrecke 5a' abgeleitet werden. Dabei kann die zu glättende Pseudostrecke 5a sowohl der ersten oder zweiten Trägerfrequenz oder aber auch einer weiteren Trägerfrequenz zugeordnet bzw. aus einem Code dieser Trägerfrequenz abgeleitet sein.

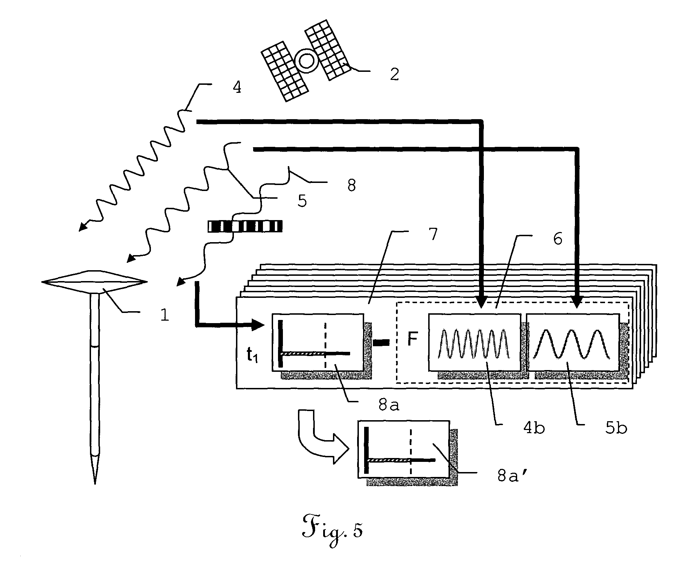

Ein erstes spezifisches Ausführungsbeispiels des erfindungsgemässen Verfahrens mit zwei Trägerfrequenzen wird in Fig.4 schematisch dargestellt. In zur Darstellung von Fig.3 ähnlicher Weise werden erste Phasenstrecke 4b und zweite Phasenstrecke 5b für die erste Trägerfrequenz 4 und die zweite Trägerfrequenz 5 gemessen. Die zu glättende Pseudostrecke 5a wird aus dem Code der zweiten Trägerfrequenz 5 abgeleitet. Alternativ könnte jedoch auch eine aus der Codierung der ersten Trägerfrequenz 4 erhaltene Pseudostrecke geglättet werden.

Fig.5 zeigt ein zweites Ausführungsbeispiels des erfindungsgemässen Verfahrens mit drei Trägerfrequenzen. Neben der ersten Trägerfrequenz 4 und der zweiten Trägerfrequenz 5 wird vom Satelliten 2 auch eine dritte Trägerfrequenz 8 ausgesandt, wobei diese dritte Trägerfrequenz 8 codiert ist. In zur Darstellung von Fig.3 und Fig. 4 ähnlicher Weise werden erste Phasenstrecke 4b und zweite Phasenstrecke 5b für die erste Trägerfrequenz 4 und die zweite Trägerfrequenz 5 gemessen. Die zu glättende Pseudostrecke 8a wird hingegen aus der Codierung der dritten Trägerfrequenz 8 erhalten. Nach der Durchführung von einigen Messungen kann die geglättete Pseudostrecke 8a' abgeleitet werden. In diesem Beispiel werden somit die zur Glättung verwendeten Phasenstrecken 4b und 5b und die zu glättende Pseudostrecke 8a für unterschiedliche Trägerfrequenzen ermittelt, so dass beispielsweise eine spektrale Optimierung erfolgen kann.

Die in den Figuren dargestellte Trägerphase entspricht physikalisch nicht exakt der tatsächlich durchgeführten Messung bezüglich einer Referenzphase. Aus Anschaulichkeitsgründen wurden die Trägerphasen und der Mehrdeutigkeitsanteil direkt mit der Pseudostrecke in Bezug gesetzt. Zudem ist trotz der gewählten systemspezifischen Beispiele das Verfahren grundsätzlich auch für beliebige gattungsgemässe satellitenbasierte Positionierungssysteme, wie z.B. GPS, Galileo oder GLONASS, erfindungsgemäss verwendbar. Insbesondere den sind die Bezeichnungen "erste" Trägerfrequenz, "zweite" Trägerfrequenz etc. nicht notwendigerweise identisch mit Bezeichnungen wie L1, L2 etc. Beispielsweise kann beispielsweise die "erste" Trägerfrequenz auch L5, die "zweite" L1 und die "dritte" L2 repräsentieren. Auch sind die in den Figuren rein exemplarisch gewählten Frequenzab- bzw. -reihenfolgen für die Trägerfrequenzen nicht als einschränkend zu betrachten.


**Patentansprüche**

1.  Positionsbestimmungsverfahren für ein satellitengestütztes Positionierungssystem mit wenigstens einer Sendeeinheit (2), wobei die Sendeeinheit (2) elektromagnetische Strahlung (S) mit wenigstens $n \geq 2$ Trägerfrequenzen $f_k$ (4,5,8) mit $k \in \{1,..n\}$ aussendet,

    o einem Empfangen der elektromagnetischen Strahlung (S) durch eine Empfangseinheit (1),
    o einem Ableiten von

    - wenigstens zwei Pseudostrecken (4a,5a,8a) und
    - wenigstens zwei Phasenstrecken (4b,5b)

    aus der empfangenen Strahlung (S), wobei zur Positionsbestimmung wenigstens eine ganzzahlige Phasenmehrdeutigkeit $N_k$ aus der Kombination der zwei Phasenstrecken (4b,5b) und der zwei Pseudostrecken (4a, 5a,8a) festgelegt wird,

**dadurch gekennzeichnet, dass**

beim Ableiten zur Glättung einer der Trägerfrequenz $f_i$ (4,5,8) zugeordneten Pseudostrecke (4a,5a,8a) aus den Phasenstrecken (4b,5b) eine Linearkombination $\phi_i^*$ (6) so gebildet wird, dass sich für einen Ionosphäreneinfluss ein positives Vorzeichen ergibt.

2. Positionsbestimmungsverfahren nach Anspruch 1,
   **dadurch gekennzeichnet, dass**

die Linearkombination $\phi_i^*$ (6) wie folgt modelliert wird

$$\phi_i^* = F(\phi_1, \phi_2) = \rho + \frac{I}{f_i^2} + G(N_1, N_2) + \varepsilon_{\phi_i^*}$$

wobei

$\phi_k$ die Phasenstrecken (4b,5b),
$F(\phi_1, \phi_2)$ die Linearkombination (6) der Phasenstrecken (4b,5b),
$\rho$ eine geometrische Strecke zwischen Sendeeinheit (2) und Empfangseinheit (1), insbesondere einschliesslich Uhrenfehlern und nichtdispersiven Fehleranteilen,

$\dfrac{I}{f_i^2}$ einen Ionosphäreneinfluss für die zu glättende Pseudostrecke (4a,5a,8a),

$G(N_1, N_2)$ eine Ambiguitätslinearkombination von Phasenmehrdeutigkeiten und
$\varepsilon_{\phi_i}^*$ einen Rauschanteil für die Linearkombination (6) bezeichnen.

3. Positionsbestimmungsverfahren nach Anspruch 2,
   **dadurch gekennzeichnet, dass**

die Linearkombination $\phi_1^*$ (6) gemäss

$$\phi_1^* = \rho - \frac{I}{f_1^2} + \lambda_1 N_1 + 2\frac{I}{f_1^2} - 2\lambda_1 N_1 \frac{f_2^2}{f_2^2 - f_1^2} + 2\lambda_2 N_2 \frac{f_2^2}{f_2^2 - f_1^2}$$

gebildet wird, wobei $f_1$ und $f_2$ die erste und zweite Trägerfrequenz (4,5) bezeichnen, insbesondere wobei für die erste und zweite Trägerfrequenz (4,5) jeweils eine Phasenstrecke (4b,5b) und eine Pseudostrecke (4a,5a) gemessen wird.

4. Positionsbestimmungsverfahren nach Anspruch 2,
   **dadurch gekennzeichnet, dass**
   die elektromagnetische Strahlung mit wenigstens $n \geq 3$ Trägerfrequenzen $f_k$ (4,5,8) mit $k \in \{1,..n\}$ ausgesendet wird

und die Linearkombination $\phi_3^*$ (6) gemäss

$$\phi_3^* = \rho + \frac{I}{f_3^2} + \lambda_1 N_1 - \left( \lambda_1 N_1 \frac{f_2^2}{f_2^2 - f_1^2} - \lambda_2 N_2 \frac{f_2^2}{f_2^2 - f_1^2} \right)$$

$$-\lambda_1 N_1 \frac{f_2^2}{f_2^2 - f_1^2}\frac{f_1^2}{f_3^2} + \lambda_2 N_2 \frac{f_2^2}{f_2^2 - f_1^2}\frac{f_1^2}{f_3^2}$$

gebildet wird, wobei $f_1$ und $f_2$ die den Phasenstrecken (4b,5b) zugeordneten Trägerfrequenzen (4,5) und $f_3$ die der Pseudostrecke (8a) zugeordnete Trägerfrequenz (8) bezeichnen.

5. Positionsbestimmungsverfahren nach einem der vorangehenden Ansprüche,
   **dadurch gekennzeichnet, dass**
   eine Differenzbildung aus Linearkombination (6) und der wenigstens einen Pseudostrecke (4a,5a,8a) erfolgt.

6. Positionsbestimmungsverfahren nach Anspruch 5,
   **dadurch gekennzeichnet, dass**
   die Differenzbildung wie folgt modelliert wird

$$R_i - \phi_i^* = -G(N_1, N_2) - \varepsilon_{\phi_i^*} + \varepsilon_{R_i}$$

mit

$$\phi_i^* = \rho + \frac{I}{f_i^2} + G(N_1, N_2) + \varepsilon_{\phi_i}$$

$$R_i = \rho + \frac{I}{f_i^2} + \varepsilon_i$$

wo
bei

   $R_i$ die der Trägerfrequenz $f_i$ (4,5,8) zugeordnete Pseudostrecke (4a,5a,8a),
   $\rho$ eine geometrische Strecke zwischen Sendeeinheit (2) und Empfangseinheit (1), insbesondere einschliesslich Uhrenfehlern und nichtdispersiven Fehleranteilen,

   $\dfrac{I}{f_i^2}$ einen Ionosphäreneinfluss für die Trägerfrequenz $f_i$ (4,5,8),

   $G(N_1, N_2)$ eine Ambiguitätslinearkombination der Phasenmehrdeutigkeiten,
   $\varepsilon_{\phi_i}^*$ einen Rauschanteil für die Linearkombination (6) und
   $\varepsilon_R$ einen Rauschanteil für die Pseudostrecke (4a,5a,8a) bezeichnen.

7. Positionsbestimmungsverfahren nach Anspruch 5 oder 6,
   **dadurch gekennzeichnet, dass**
   aus der Differenzbildung durch Rücksubstitution die geglättete Pseudostrecke (5a',8a') abgeleitet wird.

8. Positionsbestimmungsverfahren nach einem der vorangehenden Ansprüche,
   **dadurch gekennzeichnet, dass**
   das Ableiten ein Lösen eines Gleichungssystems mit wenigstens den zwei Trägerphasen (4b,5b), der geglätteten Pseudostrecke (5a',8a') und wenigstens einer weiteren Pseudostrecke (4a,5a,8a) aufweist.

9. Computerprogrammprodukt mit Programmcode, der auf einem maschinenlesbaren Träger gespeichert oder durch eine elektromagnetische Welle verkörpert ist, zur Durchführung des Positionsbestimmungsverfahrens nach einem der Ansprüche 1 bis 8, insbesondere wenn das Programm in einem Computer ausgeführt wird.

Fig. 1

Fig. 2

$t_1$

$F$

7

6

5a

4b

5b

5a'

$\mathscr{F}ig.\,3$

2

4

5

1

$t_1$

$F$

7

6

5a

4b

5b

5a'

$\mathscr{F}ig.\,4$

Fig. 5

Europäisches
Patentamt

**EUROPÄISCHER RECHERCHENBERICHT**

Nummer der Anmeldung

EP 05 10 4210

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | HWANG P Y ET AL: "Enhanced Differential GPS Carrier-Smoothed Code Processing Using Dual Frequency Measurements" PROCEEDINGS OF THE INSTITUTE OF NAVIGATION (ION) GPS, XX, XX, 18. September 1998 (1998-09-18), Seiten 461-470, XP002330223 | 1-3,5-9 | G01S5/14 |
| Y | * Seite 461 - Seite 465 * | 4 | |
| X | WO 2005/043186 A (NAVCOM TECHNOLOGY, INC; SHARPE, RICHARD, T; HATCH, RONALD, R; NELSON,) 12. Mai 2005 (2005-05-12) * Absatz [0013] * * Absatz [0032] - Absatz [0041] * * Absatz [0058] * | 1-3,5-9 | |
| X | EP 0 609 935 A (MAGNAVOX ELECTRONIC SYSTEMS COMPANY; MAGNAVOX ELECTRONIC SYSTEMS; HUGH) 10. August 1994 (1994-08-10) * Spalte 2, Zeile 48 - Spalte 7, Zeile 7 * * Spalte 10, Zeile 13 - Spalte 13, Zeile 38 * | 1-3,5-9 | |
| X | DAH-JING JWO: "Improved accuracy and divergence correction for the GPS carrier-smoothed-code processing" JOURNAL OF THE CHINESE INSTITUTE OF ELECTRICAL ENGINEERING, Bd. 7, Nr. 4, November 2000 (2000-11), Seiten 239-248, XP009055743 * Seite 239 - Seite 241 * * Seite 243 - Seite 245 * | 1-3,5-9 | |

RECHERCHIERTE SACHGEBIETE (Int.Cl.7)

G01S

-/--

Der vorliegende Recherchenbericht wurde für alle Patentansprüche erstellt

| Recherchenort | Abschlußdatum der Recherche | Prüfer |
|---|---|---|
| München | 26. Oktober 2005 | Dollinger, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches Patentamt**

# EUROPÄISCHER RECHERCHENBERICHT

Nummer der Anmeldung

EP 05 10 4210

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | US 2005/080560 A1 (HATCH RONALD R) 14. April 2005 (2005-04-14) * Zusammenfassung * * Absätze [0005], [0006] * * Absatz [0012] - Absatz [0042] * ----- | 4 | |
| A | US 2005/101248 A1 (VOLLATH ULRICH) 12. Mai 2005 (2005-05-12) * Absätze [0025], [0031], [0036] - Absatz [0107] * ----- | 1-9 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| München | 26. Oktober 2005 | Dollinger, F |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 10 4210

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-10-2005

| Im Recherchenbericht angeführtes Patentdokument | Datum der Veröffentlichung | Mitglied(er) der Patentfamilie | Datum der Veröffentlichung |
|---|---|---|---|
| WO 2005043186 A | 12-05-2005 | US 2005024263 A1 | 03-02-2005 |
| EP 0609935 A | 10-08-1994 | DE 69424890 D1 | 20-07-2000 |
| | | DE 69424890 T2 | 09-11-2000 |
| | | DK 609935 T3 | 30-10-2000 |
| | | JP 3455266 B2 | 14-10-2003 |
| | | JP 6289116 A | 18-10-1994 |
| | | US 5471217 A | 28-11-1995 |
| US 2005080560 A1 | 14-04-2005 | WO 2005036202 A1 | 21-04-2005 |
| US 2005101248 A1 | 12-05-2005 | WO 2005045463 A1 | 19-05-2005 |

EPO FORM P0461

Für nähere Einzelheiten zu diesem Anhang : siehe Amtsblatt des Europäischen Patentamts, Nr.12/82